# FASCICULE DE BREVET EUROPEEN

(11) **EP 2 579 007 B1**
(45) Date de publication et mention de la délivrance du brevet: **22.08.2018**
(21) Numéro de dépôt: 11306291.3
(22) Date de dépôt: 06.10.2011
(51) Int. Cl.: G01D 4/00, G01D 11/26, G01F 15/14, G01F 15/00, G01F 15/06

(54) **Compteur de fluide, en particulier d'eau**
Flüssigkeitszähler, insbesondere für Wasser
Fluid meter, in particular of water

(43) Date de publication de la demande: 10.04.2013
(73) Titulaire: Itron Global SARL, Liberty Lake WA 99019 (US)
(72) Inventeur: Renoud, Anthony, 01290 Saint André D'Huiriat (FR); Schwenter, Sébastien, 69460 Odenas (FR)
(74) Mandataire: Howson, Richard Giles Bentham

(56) Documents cités:
- DE-A1-102005 051 159
- US-A1- 2005 000 302
- US-A1- 2005 066 746

## Description

L'invention concerne un compteur de fluide, en particulier d'eau.

Classiquement, un compteur de fluide, en particulier d'eau, comporte une bâche pourvue d'une conduite d'arrivée et d'une conduite de sortie de l'eau et contenant une chambre de mesure, qui peut être à turbine, à piston oscillant ou statique, par exemple à ultrasons. Sur cette bâche est monté et connecté un totalisateur permettant de déterminer le débit ou le volume d'eau traversant la bâche. Ce totalisateur comporte divers éléments électriques, mécaniques et électroniques et est contenu dans un couvercle, en général en matière plastique, qui assure son maintien et qui comporte une fenêtre de visualisation d'un écran de comptage, en général à cristaux liquides.

Ce couvercle est lui-même recouvert d'une coiffe qui porte des marquages spécifiques au compteur, assure une fonction anti-fraude et présente une fenêtre externe de visualisation de l'écran.

Le totalisateur peut comporter une carte électronique de télérelevé portant l'écran et contenu dans un carter métallique recouvert de façon étanche d'une plaque transparente supérieure, assurant la vision de l'écran au travers des fenêtres de visualisation.

Afin d'assurer le télérelevé par radio fréquences, il doit être prévu une antenne connectée au système de télérelevé de la carte électronique.

Par ailleurs, la plaque transparente supérieure est classiquement en matière plastique. Or, dans le cas de conditions de fonctionnement du compteur dans un environnement difficile, en particulier lorsque le compteur est susceptible d'être immergé dans de l'eau, la matière plastique ne reste pas étanche sur une durée de vie acceptable.

DE 10 2005 051 159, US 2005/0066746, US 2005 0000302 divulguent aussi des compteurs d'eau avec système de télérelevé par radio fréquences. L'invention résout ces problèmes, tout en proposant un compteur parfaitement étanche et qui puisse permettre le télérelevé au moyen d'une antenne.

Pour ce faire, l'invention propose un compteur de fluide, en particulier d'eau, comportant un totalisateur comportant une carte électronique comportant un système de télérelevé par ondes radio et contenu dans un carter métallique recouvert de façon étanche d'une plaque supérieure, transparente à la lumière visible, ce totalisateur étant recouvert d'un couvercle maintenant avec étanchéité ladite plaque transparente supérieure et ledit couvercle étant recouvert d'une coiffe en matière plastique, compteur caractérisé en ce que ladite plaque transparente supérieure est en verre et ladite plaque transparente supérieure et ledit couvercle comportent un orifice où est disposé un agencement étanche de transmission des ondes radio de ladite carte électronique vers une antenne disposée entre ledit couvercle et ladite coiffe.

Selon un mode de réalisation préféré, ladite antenne est fixée à un insert métallique solidarisé de façon étanche contre ladite plaque transparente supérieure au moyen d'une vis disposée dans lesdits orifices et connectée audit système de télérelevé de ladite carte électronique.

De préférence, il comporte un joint d'étanchéité inséré entre ledit insert et ladite plaque de verre.

Ledit joint d'étanchéité est avantageusement surmoulé sur ledit couvercle.

De préférence, le compteur comporte un second joint d'étanchéité inséré entre ledit couvercle et ladite coiffe.

Lesdits deux joints sont avantageusement surmoulés sur ledit couvercle grâce à un canal les reliant.

Ladite vis peut être connectée par un contact à effet ressort audit système de télérelevé de ladite carte électronique.

L'invention est décrite ci-après plus en détail à l'aide de figures ne représentant qu'un mode de réalisation préféré de l'invention.
La figure 1 est une vue en perspective éclatée d'un compteur conforme à l'invention.
La figure 2 est une vue en coupe et en perspective d'un compteur conforme à l'invention.
La figure 3 est une vue partielle en coupe et en perspective d'un compteur conforme à l'invention.

Dans ce qui suit, est considérée l'orientation illustrée sur les figures pour définir le positionnement relatif des différents éléments, par exemple supérieurs ou inférieurs.

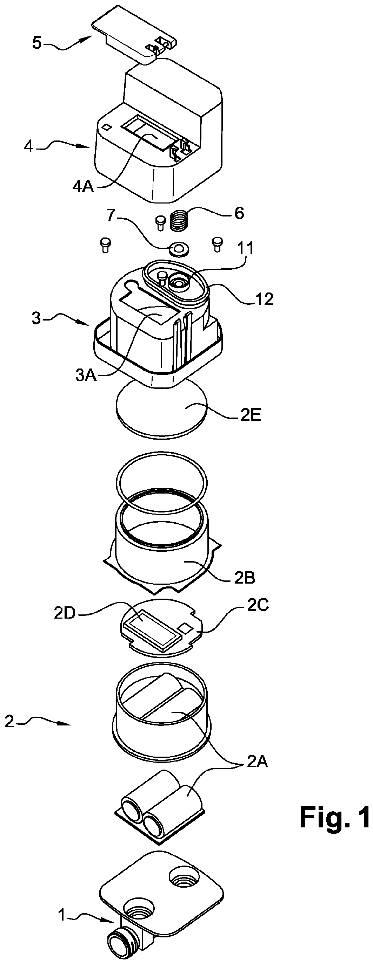

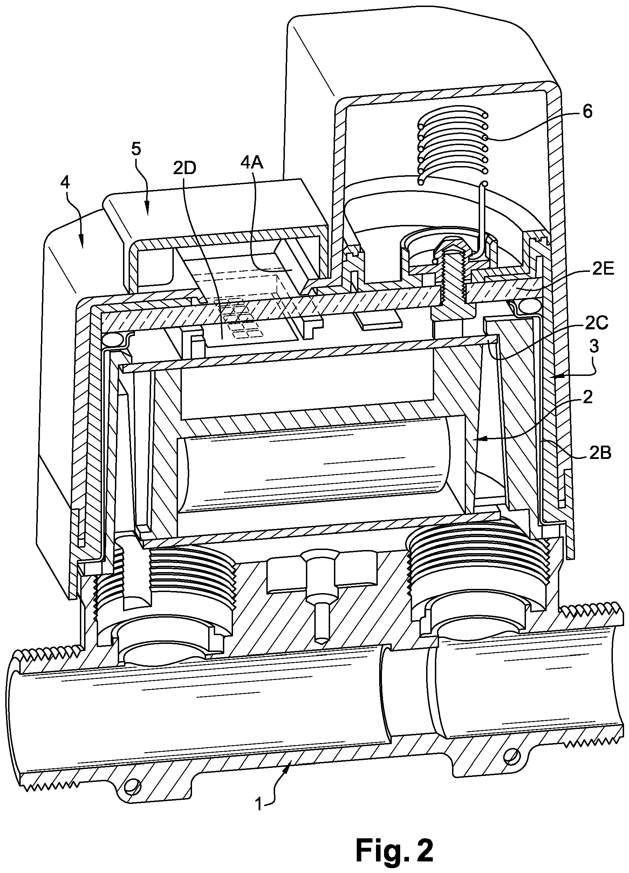

Comme représenté sur la figure 1 en position éclatée et sur la figure 2 en position assemblée, un compteur de fluide, en particulier d'eau, comporte une bâche 1 pourvue d'une conduite d'arrivée et d'une conduite de sortie de l'eau et contenant une chambre de mesure, qui peut être à turbine, à piston oscillant ou statique, par exemple à ultrasons. Sur cette bâche 1 est monté et connecté un totalisateur 2 permettant de déterminer le débit ou le volume d'eau traversant la bâche. Ce totalisateur 2 comporte divers éléments électriques, mécaniques et électroniques 2A et est contenu dans un carter 2B métallique, et comporte une carte électronique 2C comportant un système de télérelevé par ondes radio comportant également un écran de comptage 2D, de préférence à cristaux liquides, recouvert d'une plaque transparente 2E.

Ce totalisateur 2 est recouvert d'un couvercle 3, en général en matière plastique, qui assure son maintien et qui comporte une fenêtre 3A de visualisation de l'écran 2D.

Ce couvercle 3 est enfin lui-même recouvert d'une coiffe 4 qui porte des marquages spécifiques au compteur, assure une fonction anti-fraude et présente également une fenêtre externe 4A de visualisation du écran 2D. Elle contient une antenne de télérelevé 6 comme il sera vu plus loin.

Un couvre-écran 5 est monté sur la coiffe 4 pour recouvrir et protéger cet écran des rayons ultra-violets et protéger cette fenêtre externe 4A afin d'empêcher l'introduction d'éléments extérieurs tels que de la boue ou des poussières.

Afin d'assurer une étanchéité optimale tout en permettant une transmission correcte des ondes radio au moyen de l'antenne 6, la plaque transparente supérieure 2E est en verre et cette plaque transparente supérieure 2E et le couvercle 3 comportent un orifice où est disposé un agencement étanche de transmission des ondes radio de la carte électronique 2C vers l'antenne 6 disposée entre le couvercle 3 et la coiffe 4.

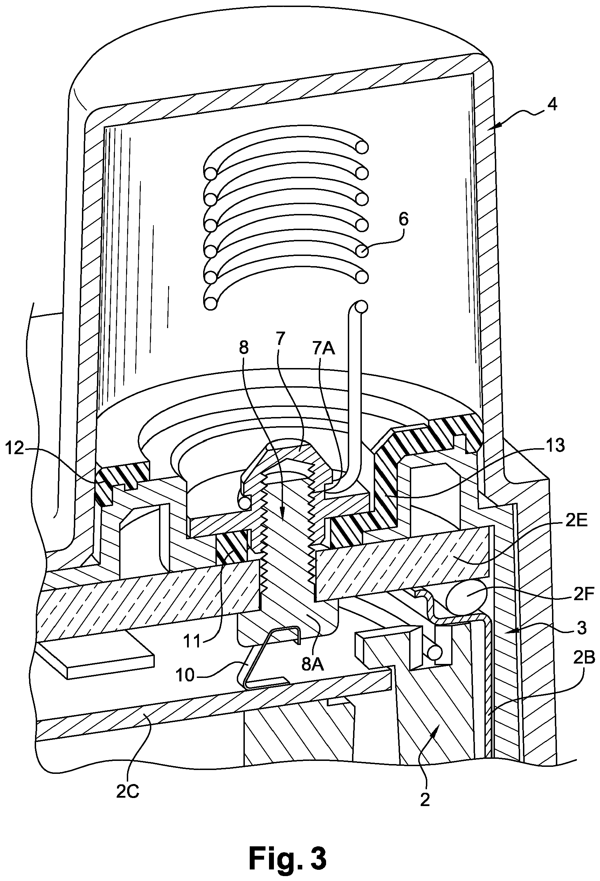

Cet agencement est représenté plus en détail sur la figure 3.

La plaque en verre 2E recouvre le carter métallique 2B avec insertion d'un joint torique 2F d'étanchéité.

La coiffe 4 comporte une proéminence supérieure destinée à contenir l'antenne 6.

L'antenne 6, ici hélicoïdale, est insérée par sa spire d'extrémité sur la rainure d'un insert métallique 7 solidarisé de façon étanche contre la plaque transparente supérieure 2E au moyen d'une vis 8 disposée dans les orifices de cette plaque transparente supérieure 2E et du couvercle 3 et connectée au système de télérelevé de la carte électronique 2C. Pour ce faire, l'insert 7 présente un taraudage 7A et la vis 8 y est vissée avec sa tête 8A disposée sous la plaque transparente supérieure 2E. de préférence, cette tête 8A est connectée par un contact à effet ressort métallique 10 au système de télérelevé de la carte électronique 2C.

Un premier joint d'étanchéité 11 est inséré entre une bride radiale de l'insert et la plaque de verre 2E, tout en assurant l'étanchéité entre ces éléments et le couvercle 3. Pour ce faire, il est avantageusement surmoulé sur le bord de l'orifice du couvercle 3.

Un second joint d'étanchéité 12 est inséré entre le couvercle 3 et la coiffe 4 et est avantageusement également surmoulé sur une paroi supérieure du couvercle 3.

Afin de faciliter la réalisation de ces deux joints 11, 12, un canal 13 les relie et ces deux joints sont conformés par une opération de surmoulage unique.

## Revendications

1. Compteur de fluide, en particulier d'eau, comportant un totalisateur (2) comportant une carte électronique (2C) comportant un système de télérelevé par ondes radio et contenu dans un carter métallique (2B) recouvert de façon étanche d'une plaque supérieure (2E) transparente à la lumière visible, ce totalisateur (2) étant recouvert d'un couvercle (3) maintenant avec étanchéité ladite plaque transparente supérieure (2E) et ledit couvercle (3) étant recouvert d'une coiffe (4) en matière plastique, compteur **caractérisé en ce que** ladite plaque transparente supérieure (2E) est en verre et ladite plaque transparente supérieure (2E) et ledit couvercle (3) comportent un orifice où est disposé un agencement étanche de transmission des ondes radio de ladite carte électronique (2C) vers une antenne (6) disposée entre ledit couvercle (3) et ladite coiffe (4).

2. Compteur selon la revendication 1, **caractérisé en ce que** ladite antenne (6) est fixée à un insert métallique (7) solidarisé de façon étanche contre ladite plaque transparente supérieure (2E) au moyen d'une vis (8) disposée dans lesdits orifices et connectée audit système de télérelevé de ladite carte électronique (2C).

3. Compteur selon la revendication 2, **caractérisé en ce qu'**il comporte un joint d'étanchéité (11) inséré entre ledit insert (7) et ladite plaque de verre (2E).

4. Compteur selon la revendication 3, **caractérisé en ce que** ledit joint d'étanchéité (11) est surmoulé sur ledit couvercle (3).

5. Compteur selon la revendication 3 ou 4, **caractérisé en ce qu'**il comporte un second joint d'étanchéité (12) inséré entre ledit couvercle (3) et ladite coiffe (4).

6. Compteur selon la revendication 4 ou 5, **caractérisé en ce que** lesdits deux joints (11, 12) sont surmoulés sur ledit couvercle (3) grâce à un canal (13) les reliant.

7. Compteur selon l'une des revendications 2 à 6, **caractérisé en ce que** ladite vis (8) est connectée par un contact à effet ressort (10) audit système de télérelevé de ladite carte électronique (2C).

## Patentansprüche

1. Flüssigkeitszähler, insbesondere von Wasser, der einen Totalisator (2) aufweist, welcher eine Elektronikkarte (2C) aufweist, die ein Fernablesesystem durch Funkwellen enthält und in einem metallischen Gehäuse (2B) enthalten ist, das dicht mit einer für das sichtbare Licht transparenten oberen Platte (2E) bedeckt ist, wobei dieser Totalisator (2) von einem Deckel (3) bedeckt wird, der die obere transparente Platte (2E) dicht hält, und der Deckel (3) mit einer Kappe (4) aus Kunststoff bedeckt ist, wobei der Zähler **dadurch gekennzeichnet ist, dass** die obere transparente Platte (2E) aus Glas ist, und die obere transparente Platte (2E) und der Deckel (3) eine Öffnung aufweisen, in der eine dichte Einrichtung zur Übertragung der Funkwellen von der Elektronikkarte (2C) zu einer Antenne (6) angeordnet ist, die zwischen dem Deckel (3) und der Kappe (4) angeordnet ist.

2. Zähler nach Anspruch 1, **dadurch gekennzeichnet, dass** die Antenne (6) an einem metallischen Einsatz (7) befestigt ist, der mittels einer Schraube (8), die in den Öffnungen angeordnet und mit dem Fernablesesystem der Elektronikkarte (2C) verbunden ist, dicht fest gegen die obere transparente Platte (2E) fixiert ist.

3. Zähler nach Anspruch 2, **dadurch gekennzeichnet, dass** er eine Dichtung (11) aufweist, die zwischen den Einsatz (7) und die Glasplatte (2E) eingefügt ist.

4. Zähler nach Anspruch 3, **dadurch gekennzeichnet, dass** die Dichtung (11) auf den Deckel (3) aufgeformt ist.

5. Zähler nach Anspruch 3 oder 4, **dadurch gekennzeichnet, dass** er eine zweite Dichtung (12) aufweist, die zwischen den Deckel (3) und die Kappe (4) eingefügt wird.

6. Zähler nach Anspruch 4 oder 5, **dadurch gekennzeichnet, dass** die zwei Dichtungen (11, 12) mit Hilfe eines sie verbindenden Kanals (13) auf den Deckel (3) aufgeformt werden.

7. Zähler nach einem der Ansprüche 2 bis 6, **dadurch gekennzeichnet, dass** die Schraube (8) durch einen Kontakt mit Federwirkung (10) mit dem Fernablesesystem der Elektronikkarte (2C) verbunden ist.

## Claims

1. Fluid meter, in particular water meter, including a totalizer (2) including an electronic board (2C) including a radio wave-based remote reading system and contained inside a metal casing (2B) covered in a sealtight manner by an upper plate (2E) that is transparent to visible light, this totalizer (2) being covered by a cover (3) holding said transparent upper plate (2E) in a sealtight manner and said cover (3) being covered by a cap (4) made of plastic, which meter is **characterized in that** said transparent upper plate (2E) is made of glass and said transparent upper plate (2E) and said cover (3) include an orifice in which there is positioned a sealtight arrangement for transmitting the radio waves from said electronic board (2C) to an antenna (6) positioned between said cover (3) and said cap (4).

2. Meter according to Claim 1, **characterized in that** said antenna (6) is fastened to a metal insert (7) that is attached in a sealtight manner against said transparent upper plate (2E) by way of a screw (8) positioned in said orifices and connected to said remote reading system of said electronic board (2C).

3. Meter according to Claim 2, **characterized in that** it includes a gasket (11) inserted between said insert (7) and said glass plate (2E).

4. Meter according to Claim 3, **characterized in that** said gasket (11) is overmoulded onto said cover (3).

5. Meter according to Claim 3 or 4, **characterized in that** it includes a second gasket (12) inserted between said cover (3) and said cap (4).

6. Meter according to Claim 4 or 5, **characterized in that** said two gaskets (11, 12) are overmoulded onto said cover (3) by virtue of a channel (13) linking them.

7. Meter according to one of Claims 2 to 6, **characterized in that** said screw (8) is connected by a spring-loaded contact (10) to said remote reading system of said electronic board (2C).
